# FASCICULE DE BREVET EUROPEEN

(11) **EP 0 781 017 B1**
(45) Date de publication et mention de la délivrance du brevet: **18.06.2003**
(21) Numéro de dépôt: 96410122.4
(22) Date de dépôt: 17.12.1996
(51) Int. Cl.: H04M 1/66

(54) **Système et procédé pour empêcher l'utilisation frauduleuse d'une ligne téléphonique par l'utilisation des codes d'authentification**
System und Verfahren zur Verhinderung der betrügerischen Benutzung einer Fernsprechleitung unter Verwendung von Authentifizierungscodes
System and method for preventing the fraudulent use of a telephone line by using authentication codes

(30) Priorité: 22.12.1995 FR 9515787
(43) Date de publication de la demande: 25.06.1997
(73) Titulaire: ASCOM MONETEL S.A., 07500 Guilherand-Granges (FR)
(72) Inventeur: Schmit,Michel, 26000 Chabeuil (FR)
(74) Mandataire: de Beaumont, Michel

(56) Documents cités:
- EP-A- 0 194 782
- FR-A- 2 614 162
- US-A- 3 307 147

## Description

La présente invention concerne un système anti-fraude destiné à empêcher l'utilisation d'une ligne téléphonique par un terminal pirate substitué, ou raccordé en parallèle, au terminal normalement raccordé en bout de ligne. Une telle utilisation frauduleuse peut se présenter sur une ligne téléphonique de raccordement d'un abonné ordinaire qui doit alors supporter le coût des communications pirates ou sur une ligne de raccordement d'un téléphone public, auquel cas le piratage se traduit par un manque à gagner pour l'opérateur du réseau téléphonique.

L'invention s'applique plus particulièrement à un système anti-fraude d'une liaison filaire formant une boucle, dite locale, entre un abonné et un central téléphonique ou un autocommutateur.

Un procédé classique destiné à éviter une utilisation frauduleuse d'une ligne téléphonique consiste à faire émettre périodiquement par le terminal (par exemple, un téléphone public) un code prédéterminé, ou clef, pendant toute une communication. Le central téléphonique auquel est raccordée l'autre extrémité de la ligne téléphonique comporte alors des moyens d'identification de la clef du terminal lui permettant d'ouvrir la ligne, c'est-à-dire de couper la communication, s'il ne reçoit pas le code associé au terminal à des intervalles réguliers prédéterminés.

Un inconvénient de ce système classique est que la transmission d'un code prédéterminé à intervalles réguliers est susceptible d'être décodée par un fraudeur qui l'intercepterait au cours d'une communication autorisée et qui le reproduirait par la suite pour pirater la ligne.

Le document US-A-3307147 décrit un système de vérification de l'établissement d'une communication téléphonique.

La présente invention vise à proposer un système anti-fraude destiné à une ligne téléphonique qui assure une sécurité optimale contre d'éventuelles tentatives de piratage de la ligne.

Pour atteindre cet objet, la présente invention prévoit un procédé d'authentification d'un terminal raccordé à une première extrémité d'une ligne téléphonique dont une deuxième extrémité est raccordée à un autocommutateur, consistant :
à émettre, durant une communication et côté terminal, une séquence pseudo-aléatoire d'impulsions calibrées en amplitude véhiculant au moins une variable temporelle calculée à partir d'au moins une caractéristique de valeur aléatoire mémorisée et liée à au moins une communication précédente, la variable temporelle étant choisie dans le groupe comprenant la durée d'une impulsion et l'intervalle de temps séparant deux impulsions successives ; et
à vérifier, côté autocommutateur, la cohérence de la séquence par rapport aux caractéristiques mémorisées lors de la communication précédente pour couper la communication en cas d'anomalie.

Selon un mode de mise en oeuvre de la présente invention, la valeur courante de la variable temporelle est fonction de la valeur précédente de la variable dans la séquence et d'au moins une caractéristique de valeur aléatoire d'au moins une communication précédente.

Selon un mode de mise en oeuvre de la présente invention, les impulsions modulent une fréquence supra-vocale.

Selon un mode de mise en oeuvre de la présente invention, la caractéristique de valeur aléatoire correspond au nombre d'impulsions contenues dans la séquence de la communication précédente.

Selon un mode de mise en oeuvre de la présente invention, la caractéristique de valeur aléatoire correspond à la durée d'au moins une communication précédente.

Selon un mode de mise en oeuvre de la présente invention, la caractéristique de valeur aléatoire est liée au numéro composé lors d'au moins une communication précédente.

Selon un mode de mise en oeuvre de la présente invention, la durée d'une impulsion est choisie pour être supérieure à la durée d'une période d'interruption en boucle coupée d'une numérotation décimale majorée du double de la durée minimum nécessaire à la détection d'une impulsion côté autocommutateur.

Selon un mode de mise en oeuvre de la présente invention, le procédé consiste à provoquer, côté terminal et lors d'une séquence d'initialisation, une coupure de la communication au bout d'un temps aléatoire.

Selon un mode de mise en oeuvre de la présente invention, la plage de variation possible de la variable temporelle est divisée en classes de durées prédéterminées.

Selon un mode de mise en oeuvre de la présente invention, le procédé consiste à utiliser une séquence d'initialisation, après chaque coupure de ligne déclenchée côté autocommutateur, un premier intervalle de temps de ladite séquence d'initialisation correspondant à une classe supplémentaire prédéterminée et un deuxième intervalle de temps étant choisi au hasard, côté terminal, hors des valeurs utilisées lors de séquences d'initialisation précédentes.

Selon un mode de mise en oeuvre de la présente invention, le procédé consiste à utiliser des classes supplémentaires pour transmettre des informations au terminal au moyen de la ligne téléphonique.

La présente invention prévoit également un système anti-fraude d'une ligne téléphonique allouée à un terminal et raccordée à un autocommutateur, comportant :
côté terminal, un dispositif d'émission d'une séquence pseudo-aléatoire d'impulsions durant une communication, la séquence véhiculant au moins une variable temporelle, choisie dans le groupe comprenant la durée d'une impulsion et l'intervalle de temps séparant deux impulsions successives et, basée sur au moins une caractéristique de valeur aléatoire liée à au moins une communication précédente et mémorisée dans le dispositif d'émission ; et
côté autocommutateur, un dispositif de détection de la séquence pseudo-aléatoire pourvu de moyens pour ouvrir la ligne si la séquence détectée n'est pas cohérente avec la caractéristique de valeur aléatoire liée à la communication précédente et mémorisée dans le dispositif de réception.

Selon un mode de réalisation de la présente invention, le dispositif d'émission est intégré au terminal.

Selon un mode de réalisation de la présente invention, les dispositifs d'émission et de réception comportent un circuit de détection du courant de ligne.

Ces objets, caractéristiques et avantages, ainsi que d'autres de la présente invention seront exposés en détail dans la description suivante de modes de réalisation et de mise en oeuvre particuliers faite à titre non-limitatif en relation avec les figures jointes parmi lesquelles :
la figure 1 représente sous forme de schéma-blocs un premier mode de réalisation d'un système anti-fraude selon la présente invention ;
la figure 2 représente sous forme de schéma-blocs un deuxième mode de réalisation d'un système anti-fraude selon la présente invention ;
la figure 3 illustre, sous forme de chronogramme, un premier mode de mise en oeuvre du procédé d'authentification d'un terminal selon la présente invention ;
la figure 4 représente sous forme de schéma-blocs un mode de réalisation d'un dispositif d'émission d'un système anti-fraude selon la présente invention ;
la figure 5 représente sous forme de schéma-blocs un mode de réalisation d'un dispositif de détection du système anti-fraude selon la présente invention ; et
la figure 6 illustre le fonctionnement du système selon l'invention lors d'une transmission d'un numéro d'abonné par numérotation décimale.

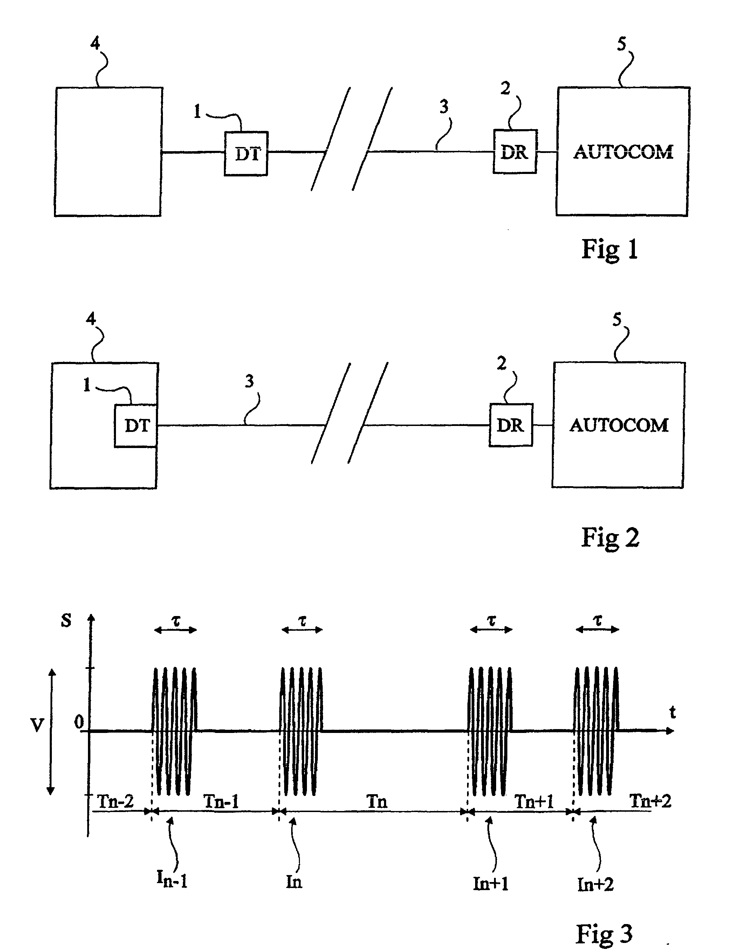

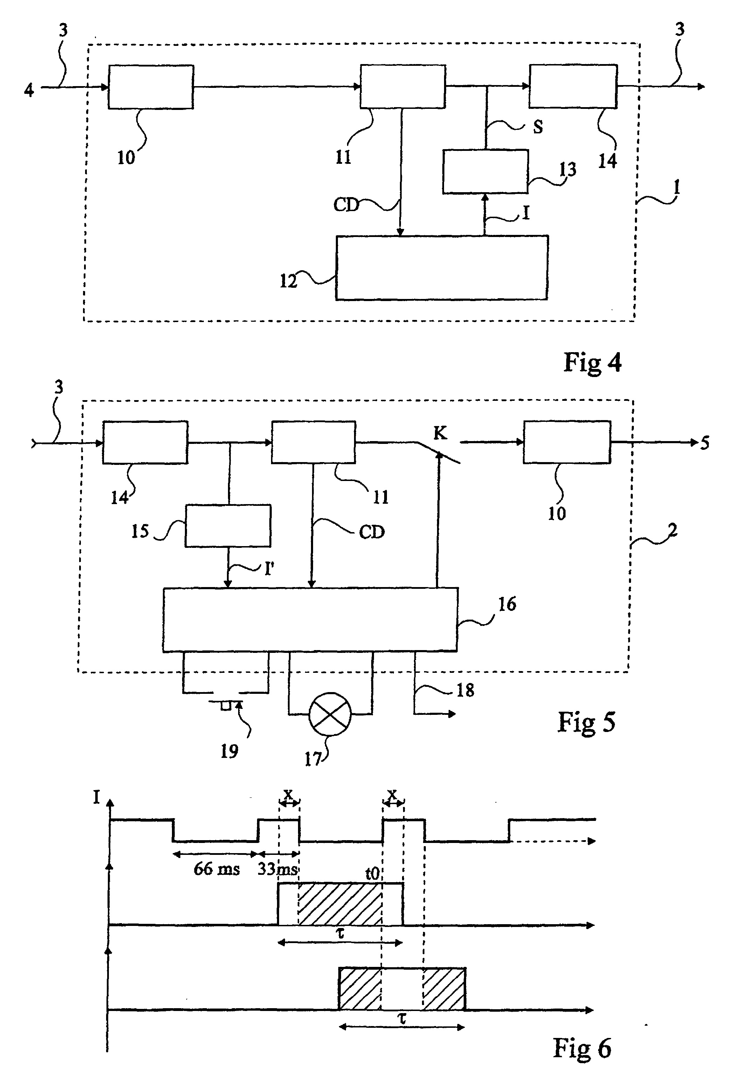

Pour des raisons de clarté, les mêmes éléments ont été désignés par les mêmes références aux différentes figures. De même, seuls les éléments nécessaires à la compréhension de l'invention ont été représentés aux figures. En outre, les chronogrammes des figures 3 et 6 ne sont pas à l'échelle.

La figure 1 représente un mode de réalisation d'un système anti-fraude selon la présente invention. Ce système est constitué d'un dispositif d'émission 1 et d'un dispositif de détection 2 placés sur une ligne téléphonique 3 entre un terminal 4 et un autocommutateur 5 ou central téléphonique.

Le dispositif d'émission DT 1 est destiné à émettre, durant une communication transitant par l'autocommutateur AUTOCOM 5, une séquence d'impulsions à l'attention du dispositif de détection DR 2. Les impulsions sont obtenues en modulant une fréquence supra-vocale au moyen d'impulsions calibrées en amplitude.

Le dispositif 2 est destiné à détecter l'apparition des impulsions sur la ligne téléphonique et à contrôler la séquence selon laquelle elles sont reçues pour couper la communication si cette séquence n'est pas correcte.

La séquence d'impulsions permet au dispositif 2 d'authentifier que la communication en cours provient bien du terminal 4 auquel est allouée la ligne téléphonique 3.

Une caractéristique de la présente invention est que l'authentification de la provenance d'une communication s'effectue, non pas sur la base du contenu des impulsions mais, sur la base d'une variable temporelle associée aux impulsions. Cette variable temporelle est, selon l'invention, la durée d'une impulsion et/ou l'intervalle de temps qui sépare deux impulsions successives. On fait varier, de préférence au cours de la séquence, la durée des impulsions d'un train d'impulsions de fréquence fixe, l'intervalle de temps qui sépare deux impulsions successives de durées fixes ou une combinaison des deux.

Le choix d'une fréquence supra-vocale est lié au fait que l'authentification du terminal utilisant la ligne téléphonique s'effectue en continu durant la communication. La fréquence de la porteuse (par exemple, 22 kHz) est choisie pour être suffisamment éloignée de la fréquence utilisée (généralement 12 ou 16 kHz) pour d'éventuelles impulsions de télétaxation. La fréquence de la porteuse est, de préférence, choisie entre 10 et 30 kHz.

La figure 2 représente un deuxième mode de réalisation d'un système selon la présente invention. La distinction par rapport au système représenté à la figure 1 est que le dispositif d'émission 1 est intégré au terminal 4 raccordé à la ligne 3. Un avantage de ce mode de réalisation est qu'il supprime toute connexion accessible entre le terminal 4 et le dispositif 1. Bien que le dispositif de réception 2 puisse également être intégré à l'autocommutateur 5, cela est moins critique de ce côté de la ligne 3 dans la mesure où les centraux téléphoniques sont difficilement accessibles aux fraudeurs.

La figure 3 illustre sous forme de chronogramme le fonctionnement d'un système anti-piratage selon un premier mode de mise en oeuvre de la présente invention. Cette figure représente partiellement une séquence S d'authentification émise par un dispositif 1 durant une communication téléphonique. La variable temporelle qui est transmise par le train d'impulsions est ici constituée par l'intervalle de temps entre deux impulsions successives.

Selon ce mode de mise en oeuvre, la séquence S est constituée d'impulsions In (où n représente le numéro d'ordre de l'impulsion dans la séquence depuis le début de la communication) d'amplitudes calibrées V et de courtes durées t. Deux impulsions voisines, par exemple In et In+1, sont distantes d'une durée Tn pseudo-aléatoire. Une impulsion In est en fait constituée d'un train d'impulsions de la fréquence supra-vocale de longueur t.

Le temps Tn qui sépare deux impulsions successives In et In+1 est fonction de la durée Tn-1 écoulée entre les deux impulsions précédentes In-1 et In et d'au moins une caractéristique d'au moins une communication précédente entre le terminal et le central.

La sécurité apportée par le système selon la présente invention réside dans la non-reproductibilité de la séquence pseudo-aléatoire qui utilise une caractéristique d'au moins une communication précédente se comportant comme un aléa connu des deux extrémités de la ligne sans pour autant avoir été transmise de l'une vers l'autre, notamment pendant la communication courante.

Plusieurs paramètres d'une communication précédente possèdent ce caractère aléatoire et peuvent être utilisés, seuls ou en combinaison, dans une fonction de calcul arithmétique et/ou logique des durées Tn.

Par exemple, on peut utiliser la durée de la communication précédente, la durée de l'avant-dernière communication ou d'une communication encore antérieure. On peut également utiliser le numéro appelé lors de la communication précédente. Dans le cas où la numérotation est effectuée par fréquences vocales, les dispositifs 1 et 2 sont, le cas échéant, pourvus d'un module de détection de codes à fréquences vocales pour analyser le contenu de la numérotation.

On peut également utiliser, comme caractéristique aléatoire, le nombre d'impulsions In générées par le système lors d'au moins une communication précédente. Un avantage d'un tel paramètre est qu'il est plus facile à mesurer que la durée de la communication précédente tout en étant lié à cette durée. Un autre avantage, sensible dans le cas où la variable temporelle est constituée par l'intervalle de temps qui sépare deux impulsions, est que cela améliore encore la sécurité du système. En effet, le nombre d'impulsions In de la communication précédente intègre alors automatiquement ceux des communications antérieures.

La formule ou l'algorithme de calcul peut également faire appel, par exemple, à la date ou à l'heure d'une communication. On peut également introduire dans l'algorithme une variable supplémentaire constituée d'un code, ou clef, alloué à la ligne téléphonique, ce code étant changé périodiquement au sein des dispositifs 1 et 2. Côté autocommutateur 5, la modification du code est, par exemple, effectuée au moyen d'un modem. Côté terminal, la modification peut être effectuée par l'utilisateur au moyen du clavier du terminal intégrant le dispositif 1 ou être téléchargée depuis un système de supervision raccordé au réseau téléphonique.

On veillera dans le choix de la fonction de calcul utilisée à ce que son application aux variables donne des valeurs distribuées de manière aussi équiprobables que possible.

Les figures 4 et 5 représentent schématiquement un mode de réalisation, respectivement, d'un dispositif d'émission 1 et d'un dispositif de détection 2 de séquences d'authentification selon la présente invention. Aux figures 4 et 5, les liaisons entre les différents blocs des dispositifs ont été représentées par des flèches unidirectionnelles correspondant au sens de passage du signal supra-vocal comportant la séquence d'authentification. On notera cependant que les dispositifs 1 et 2 sont intercalés sur une ligne téléphonique 3 qui est bidirectionnelle.

Le dispositif 1 comporte, côté terminal 4, un circuit 10 de réjection du signal supra-vocal destiné à empêcher que les impulsions In ne soient véhiculées vers le terminal. La réalisation du circuit 10, par exemple au moyen de filtres, est à la portée de l'homme du métier. Le circuit 10 est suivi d'un bloc 11 de détection de la présence d'une communication sur la ligne. Ce bloc 11 est, par exemple, constitué d'un détecteur de courant et de polarité de ligne classique. Le bloc 11 délivre à un module de calcul 12 un signal CD indicateur de la présence d'une communication. Le module 12 est destiné à mettre en oeuvre l'algorithme de calcul, par exemple, des intervalles de temps Tn entre deux impulsions. Les impulsions sont générées au moyen d'un générateur 13 de fréquence supra-vocale commandé par un signal I issu du module 12 et délivrant des impulsions In de durée t. Le signal issu du terminal traversant le bloc 11 est mélangé à la séquence S délivrée par le générateur 13. Il traverse un circuit 14 de protection contre d'éventuelles surtensions de la ligne que comporte le dispositif 1. La sortie du circuit 14 constitue la sortie du dispositif 1 raccordée à la ligne 3 côté central.

Le dispositif 1 comporte également des moyens d'alimentation (non représentés) destinés à extraire de la ligne téléphonique l'alimentation nécessaire à son fonctionnement. Dans le cas où le dispositif est intégré à un terminal, on pourra utiliser l'alimentation du terminal, le cas échéant, fournie par le secteur.

Le module 12 est, par exemple, constitué d'un microprocesseur exécutant l'algorithme d'établissement de la séquence S associé à un circuit logique. Bien que le module 12 puisse être intégralement réalisé en logique câblée, on préfère avoir recours à un microprocesseur programmable pour permettre une modification de l'algorithme (par exemple, par téléchargement) minimisant le risque qu'un fraudeur reproduise l'algorithme à partir d'un examen d'un circuit câblé.

Le dispositif 2 (figure 5) comporte un circuit de protection 14 côté ligne 3, et un circuit 10 de réjection de fréquence supra-vocale côté central 5. La sortie du circuit 14 est envoyée à un bloc 11 de détection du courant de ligne ainsi qu'à un détecteur 15 de la présence d'une séquence supra-vocale sur la ligne. Le bloc 11 délivre un signal CD indicateur de la présence d'une communication à un module de calcul 16. Le module 16 reçoit également, du détecteur 15, un signal I' reproduisant la séquence S, par exemple, sous forme d'impulsions In de durée t. Le module 16 commande un commutateur K destiné à ouvrir la ligne, par exemple entre le bloc 11 et le circuit 10. L'état de repos du commutateur K est, de préférence, fermé pour assurer une continuité de la ligne 3 à moindre énergie.

Le module 16 est chargé d'appliquer un algorithme de vérification au signal I'. L'algorithme de vérification compare alors les valeurs restituées par une fonction inverse à celle utilisée dans l'algorithme du module 12 (figure 4) avec des valeurs contenues, par exemple, en mémoire vive (non représentée). En cas d'incohérence, le module 16 commande l'ouverture de la ligne au moyen du commutateur K pendant un temps suffisamment long pour provoquer une coupure de la communication.

Le module 16 est, par exemple, constitué d'un microprocesseur associé à un circuit logique. Le recours à des moyens de télé-alimentation du dispositif 2 n'est généralement pas nécessaire dans la mesure où on a accès, au niveau de l'autocommutateur, à la tension continue (généralement 48 volts) des lignes ou à une alimentation secteur. Un avantage de ne pas avoir à alimenter directement le dispositif 2 (ou 1) à partir de la ligne 3 est que tout le courant de ligne est ainsi disponible pour la communication.

Le module 16 du dispositif 2 peut générer des signaux d'alarme lorsqu'il détecte un piratage de ligne. Ces signaux sont destinés à des indicateurs d'alarme locaux (par exemple, un voyant 17) ou à distance (par exemple, par l'intermédiaire d'une liaison série 18). Le dispositif 2 comporte, de préférence, un bouton 19 permettant à un opérateur de réinitialiser le système.

On notera que le module 16 peut être partagé entre plusieurs lignes. Seuls les blocs 10, 11, 14 et 15 d'un dispositif 2 doivent être individualisés pour une ligne filaire donnée.

Comme les dispositifs 1 et 2 effectuent des calculs sur des données qu'ils ont généré et mesuré de manière indépendante et avec des moyens distincts, on veillera à ce que l'écart temporel entre deux valeurs de la variable temporelle correspondant à deux valeurs successives du calcul soit suffisamment grand pour que la résolution et la dispersion des générateurs et des détecteurs utilisés n'entraînent pas une différence de plus d'une unité dans les valeurs prises en compte par les dispositifs 1 et 2 pour les mêmes variables.

La plage de variation des intervalles de temps est, selon l'invention, divisée en classes de durées supérieures à la précision effective avec laquelle peuvent être effectuées les générations et détections des séquences. L'algorithme du dispositif 1 délivre un numéro de classe qu'il convertit en durée Tn tandis que l'algorithme du dispositif 2 utilise, comme variable, le numéro de classe correspondant à l'intervalle de temps Tn séparant l'impulsion courante In de la précédente In-1.

Lorsque le dispositif 2 détecte une anomalie dans une séquence et en supposant que la durée Tn mesurée est comprise dans la plage de tolérance (liée à la résolution) autour de la limite d'une classe, il recommence le calcul sur la base du numéro de classe le plus proche du numéro attribué à l'intervalle de temps courant Tn par la détection. Si le résultat devient correct avec cette nouvelle classe, cette dernière sera prise comme référence pour le calcul suivant. Ainsi, le système selon l'invention est auto-adaptatif. On veillera à ce que le détecteur 15 soit suffisamment sélectif pour ne pas interpréter des parasites en ligne comme des impulsions valides.

A titre d'exemple particulier et en supposant que la précision des mesures est de l'ordre de 100 ms et que la plage de variation des intervalles Tn est de 15 secondes, on divise cette plage en une trentaine de classes d'environ 500 ms. En supposant que la précision des mesures est de l'ordre de 20 ms, on prévoit, par exemple, des classes d'une durée d'environ 100 ms et des impulsions d'une durée t de l'ordre de 30 ms.

Des numéros de classe qui ne sont pas compris dans la plage de variation peuvent être réservés à des échanges d'informations entre les dispositifs 1 et 2. Par exemple, une classe peut signaler une réinitialisation du système et plusieurs classes peuvent servir à télécharger une nouvelle clef dans le dispositif 1 depuis le dispositif 2. On peut, par exemple réserver dix classes auxquelles on affecte un numéro de zéro à neuf pour le téléchargement d'une clef.

Lors d'une première communication qui suit la mise en service du terminal ou une interruption prolongée de la ligne, les deux premières impulsions sont séparées par un intervalle de temps Tinit correspondant à une classe prédéterminée hors de la plage de variation. Lorsque le dispositif 2 détecte la durée Tinit, il soustrait ou additionne au numéro de la classe une constante prédéterminée destinée à ramener le numéro de classe parmi les classes de durée autorisées pour que la durée Tinit puisse servir de variable à l'intervalle de temps suivant. Ainsi, le dispositif 2 peut détecter une réinitialisation côté terminal et, par exemple, si une telle réinitialisation intervient trop souvent, détecter une tentative de fraude.

Une impulsion I0 suivant l'impulsion Iinit sera émise au bout d'un temps T0 choisi au hasard par le dispositif 1, de préférence, hors des valeurs déjà utilisées lors de séquences d'initialisation précédentes et mémorisées dans le dispositif 1. Le dispositif 2 qui reconnaît l'apparition d'une séquence d'initialisation peut alors déduire la valeur associée au temps T0 sur la base du temps Tinit. Lors d'une séquence d'initialisation, les caractéristiques liées à la communication précédente sont, par exemple, considérées comme nulles. Ainsi, deux séquences d'initialisation débutant par les intervalles de temps Tinit et T0 ne sont pas identiques, ce qui impose aux fraudeurs éventuels une observation très longue de la ligne avant de pouvoir reproduire le comportement du dispositif anti-fraude.

Lorsqu'une interruption est provoquée par le dispositif 2, celle-ci est détectée par le dispositif 1 au moyen du bloc 11 ce qui lui permet, lors de l'établissement de la communication suivante, d'émettre une séquence d'initialisation. Un avantage de provoquer l'émission d'une séquence d'initialisation à chaque coupure provoquée par le dispositif 2 est que cela permet d'optimiser la sécurité du système. En effet, si une nouvelle anomalie apparaît lors de la communication suivante, la probabilité de fraude est importante, ce qui permet au dispositif 2 de provoquer une coupure beaucoup plus longue et/ou de générer une alarme.

Pour éviter, dans le cas où le terminal 4 raccroche avant que le dispositif 1 ait détecté une ouverture de la ligne provoquée par le dispositif 2, que le dispositif 2 s'attende à recevoir une séquence d'initialisation alors que le dispositif 1 émet la séquence suivante de manière normale, le dispositif 2 tient compte du raccroché du terminal. Ainsi, si le dispositif 2 détecte au moyen du bloc 11 une fin de communication avant d'avoir commandé l'ouverture de la ligne au moyen du commutateur K, il s'attend à recevoir lors de la communication suivante une séquence basée sur des caractéristiques de la communication précédente. Il est cependant possible que la commande de coupure du dispositif 2 soit quasi-simultanée avec le raccroché du terminal. Dans ce cas, les durées de la communication enregistrées par les dispositifs 1 et 2 sont voisines. Le dispositif 2 tentera donc, à la communication suivante, de faire une vérification sur la base des caractéristiques de la communication précédente en utilisant, le cas échéant, le numéro de classe immédiatement voisin, ce qui permet de valider la communication.

Si la durée de la communication précédente (ou le nombre d'impulsions de sa séquence) constitue une variable de l'algorithme, on peut également prévoir que, lors d'une séquence d'initialisation, la communication soit systématiquement coupée par le dispositif 1 (pourvu alors de moyens adaptés) au bout d'un temps aléatoire. Ainsi, la séquence de la communication suivante est basée sur une caractéristique aléatoire de la communication précédente, même si elle suit une séquence d'initialisation.

De préférence, si la durée d'une communication précédente est utilisée comme variable de l'algorithme, on utilise une mesure logarithmique compte tenu de la plage très importante de durées possibles. On veillera cependant à ce qu'un enchaînement de deux communications (coupure d'au moins 2 secondes) soit interprété comme deux communications distinctes.

Le système anti-fraude selon la présente invention fonctionne quel que soit le type de numérotation (fréquences vocales ou décimale) utilisé par le terminal.

Une numérotation décimale s'accompagne de brèves périodes de coupure de ligne dont les détecteurs 11 des dispositifs 1 et 2 ne tiennent pas compte. Généralement, une période d'interruption en boucle coupée, ou ouverte, dure environ 66 ms et une période d'interruption en boucle établie, ou fermée, dure environ 33 ms. Une succession de telles périodes constitue la numérotation décimale.

On veillera donc, selon la présente invention, à prévoir des impulsions In d'une durée t choisie en fonction de la rapidité du détecteur 15 du dispositif 2 pour éviter des erreurs de détection.

Si le système fonctionne avec des durées t d'impulsions In longues (plusieurs centaines de millisecondes) et avec un détecteur 15 lent, le détecteur 15 ignore les interruptions d'une durée inférieure à 100 millisecondes dans les impulsions reçues. Ainsi, une ouverture de 66 ms ne perturbe pas le fonctionnement du système.

La figure 6 illustre le fonctionnement d'un système selon l'invention avec des impulsions In de durée t plus courte et des détecteurs plus rapides. Cette figure représente, sous forme de chronogrammes, deux exemples d'apparition d'une impulsion émise par le dispositif 1 pendant une numérotation décimale. Le premier chronogramme représente le courant de ligne. Le deuxième chronogramme représente une impulsion débutant dans une fermeture de la numérotation. Le troisième chronogramme représente une impulsion débutant dans une ouverture de la numérotation.

Selon l'invention et si le système est prévu pour fonctionner en numérotation décimale, la durée t des impulsions est choisie pour être supérieure à la durée d'une ouverture majorée du double de la durée minimum de détection d'une impulsion par le détecteur 15 (t > (66 + 2X)ms, où X représente la durée minimum de détection d'une impulsion).

Ainsi, si une impulsion In débute dans une fermeture, le dispositif 2 détectera deux impulsions successives séparées par une ouverture de 66 ms. Dans ce cas, le dispositif 2 ignore la deuxième impulsion car la mesure s'effectue sur la détection du début d'une impulsion.

Si une impulsion In débute dans une ouverture, le dispositif 2 ne détecte qu'une impulsion pendant la fermeture suivante. A la figure 6, les périodes durant lesquelles le dispositif 2 ne détecte pas une impulsion ont été hachurées.

On veillera, le cas échéant, à ce que le détecteur 2 applique une tolérance plus importante pour la détermination de la classe à laquelle appartient une impulsion In donnée. En effet, une impulsion détectée au début d'une fermeture (instant t0) peut en fait avoir débuté à t - 66 ms - X ms. Selon l'invention, la modification de la tolérance appliquée par le dispositif 2 pour la détermination de la classe s'effectue de manière automatique dans la mesure où il identifie la présence d'une numérotation décimale au moyen du bloc 11. Ainsi, à l'apparition d'une numérotation décimale, le détecteur s'adapte automatiquement. Il revient en fonctionnement normal après une durée prédéterminée correspondant, par exemple, à un comptage du nombre maximum de chiffres autorisés dans le cadre d'une numérotation décimale.

Selon un deuxième mode de mise en oeuvre de la présente invention (non représenté), la variable temporelle est constituée par les durées des impulsions qui sont générées à une fréquence fixe. Dans ce cas, le module 12 (figure 4) génère un train d'impulsions de durées variables à une fréquence fixe et met en oeuvre un algorithme permettant de calculer les durées successives des impulsions, et de générer en conséquence un signal modulant le générateur supra-vocal 13. La durée d'une impulsion donnée est fonction de la durée de l'impulsion précédente et d'au moins une caractéristique aléatoire d'au moins une communication précédente. Côté réception, le module 16 (figure 5) mesure les durées successives des impulsions qui composent le signal délivré par le détecteur 15 et vérifie leur authenticité en leur appliquant la fonction inverse à celle utilisée par le module 12.

De même que dans le premier mode de mise en oeuvre, la plage de variation des durées à mesurer est divisée en plusieurs classes de durées, grandes par rapport à la résolution des détecteurs.

Un avantage du premier mode de mise en oeuvre par rapport au deuxième est que l'énergie requise pour la transmission de la séquence est moindre. En effet, en supposant que la plage de variation de la durée des impulsions est maximale dans le deuxième mode de mise en oeuvre, c'est-à-dire qu'elle correspond sensiblement à la période des impulsions et que l'algorithme donne une distribution de valeurs équiprobable, la consommation moyenne en énergie du générateur supra-vocal est alors de l'ordre de 50% de sa puissance crête. Par contre, dans le premier mode de mise en oeuvre, la consommation moyenne est très nettement inférieure dans la mesure où les impulsions sont de courtes durées devant les intervalles de temps entre deux impulsions.

Bien entendu, la présente invention est susceptible de diverses variantes et modifications qui apparaîtront à l'homme de l'art. En particulier, chacun des éléments décrits pourra être remplacé par un ou plusieurs éléments remplissant la même fonction. De plus, la réalisation pratique des différents constituants des dispositifs 1 et 2 est à la portée de l'homme du métier en fonction des indications fonctionnelles données ci-dessus. On veillera, en particulier en cas de télé-alimentation, à ce que l'insertion des systèmes sur la ligne entraîne une consommation la plus faible possible, notamment lorsque le terminal est raccroché. En outre, les deux modes de mise en oeuvre de l'invention décrits ci-dessus pourront être combinés, le dispositif 2 prenant alors en compte pour vérifier l'authenticité d'une communication, soit une seule des variables temporelles du train d'impulsions (durée d'une impulsion ou intervalle de temps entre deux impulsions), par exemple de manière aléatoire, soit les deux.

## Revendications

1. Procédé d'authentification d'un terminal (4) raccordé à une première extrémité d'une ligne téléphonique (3) dont une deuxième extrémité est raccordée à un autocommutateur (5), **caractérisé en ce qu'**il consiste :
à émettre, durant une communication et côté terminal (4), une séquence (S) pseudo-aléatoire d'impulsions (In) calibrées en amplitude véhiculant au moins une variable temporelle (Tn) calculée à partir d'au moins une caractéristique de valeur aléatoire mémorisée et liée à au moins une communication précédente, ladite variable temporelle étant choisie dans le groupe comprenant la durée d'une impulsion et l'intervalle de temps (Tn) séparant deux impulsions successives ; et
à vérifier, côté autocommutateur (5), la cohérence de ladite séquence (S) par rapport auxdites caractéristiques mémorisées lors de la communication précédente pour couper la communication en cas d'anomalie.

2. Procédé d'authentification selon la revendication 1, **caractérisé en ce que** la valeur courante (Tn) de la variable temporelle est fonction de la valeur précédente (Tn-1) de la variable dans la séquence (S) et d'au moins une caractéristique de valeur aléatoire d'au moins une communication précédente.

3. Procédé d'authentification selon la revendication 1 ou 2, **caractérisé en ce que** les impulsions (In) modulent une fréquence supra-vocale.

4. Procédé d'authentification selon l'une quelconque des revendications 1 à 3, **caractérisé en ce que** ladite caractéristique de valeur aléatoire correspond au nombre d'impulsions (In) contenues dans la séquence (S) de la communication précédente.

5. Procédé d'authentification selon l'une quelconque des revendications 1 à 4, **caractérisé en ce que** ladite caractéristique de valeur aléatoire correspond à la durée d'au moins une communication précédente.

6. Procédé d'authentification selon l'un quelconque des revendications 1 à 5, **caractérisé en ce que** ladite caractéristique de valeur aléatoire est liée au numéro composé lors d'au moins une communication précédente.

7. Procédé d'authentification selon l'une quelconque des revendications 1 à 6, **caractérisé en ce que** la durée (t) d'une impulsion (In) est choisie pour être supérieure à la durée d'une période d'interruption en boucle coupée d'une numérotation décimale majorée du double de la durée minimum (X) nécessaire à la détection d'une impulsion (In) côté autocommutateur (5).

8. Procédé d'authentification selon l'une quelconque des revendications 1 à 7, **caractérisé en ce qu'**il consiste à provoquer, côté terminal (4) et lors d'une séquence d'initialisation, une coupure de la communication au bout d'un temps aléatoire.

9. Procédé d'authentification selon l'une quelconque des revendications 1 à 8, **caractérisé en ce que** la plage de variation possible de la variable temporelle (Tn) est divisée en classes de durées prédéterminées.

10. Procédé d'authentification selon la revendication 9, **caractérisé en ce qu'**il consiste à utiliser une séquence d'initialisation après chaque coupure de ligne déclenchée côté autocommutateur (5), un premier intervalle de temps (Tinit) de ladite séquence d'initialisation correspondant à une classe supplémentaire prédéterminée et un deuxième intervalle de temps (T0) étant choisi au hasard, côté terminal (4), hors des valeurs utilisées lors de séquences d'initialisation précédentes.

11. Procédé d'authentification selon la revendication 9 ou 10, **caractérisé en ce qu'**il consiste à utiliser des classes supplémentaires pour transmettre des informations au terminal (4) au moyen de la ligne téléphonique (3).

12. Système anti-fraude d'une ligne téléphonique (3) allouée à un terminal (4) et raccordée à un autocommutateur (5), **caractérisé en ce qu'**il comporte :
côté terminal (4), un dispositif (1) d'émission d'une séquence (S) pseudo-aléatoire d'impulsions (In) durant une communication, ladite séquence (S) véhiculant au moins une variable temporelle (Tn) choisie dans le groupe comprenant la durée d'une impulsion et l'intervalle de temps séparant deux impulsions successives, et basée sur au moins une caractéristique de valeur aléatoire liée à au moins une communication précédente et mémorisée dans le dispositif d'émission (1) ; et
côté autocommutateur (5), un dispositif (2) de détection de ladite séquence pseudo-aléatoire (S) pourvu de moyens (K) pour ouvrir la ligne (3) si la séquence détectée n'est pas cohérente avec ladite caractéristique de valeur aléatoire liée à la communication précédente et mémorisée dans le dispositif de réception (2).

13. Système selon la revendication 12, **caractérisé en ce que** le dispositif d'émission (1) est intégré au terminal (4).

14. Système selon la revendication 12 ou 13, **caractérisé en ce que** les dispositifs d'émission (1) et de réception (2) comportent un circuit (11) de détection du courant de ligne (3).

## Patentansprüche

1. Ein Authentisierungsverfahren für einen Terminal (4), der mit einem ersten Ende einer Telefonleitung (3) verbunden ist, deren zweites Ende mit einer Schalttafel (5) verbunden ist, **dadurch gekennzeichnet, dass** es die folgenden Schritte aufweist:
Übertragen vom Terminal (4) und zwar während einer Kommunikation einer Pseudo-Zufallssequenz (S) von Pulsen (In), die hinsichtlich der Amplitude kalibriert sind und zumindest eine temporäre Variable (Tn) tragen, die aus zumindest einer gespeicherten Charakteristik an Zufallswerten berechnet ist und in Beziehung steht zu zumindest einer vorhergehenden Kommunikation, wobei die temporäre Variable ausgewählt ist aus der Gruppe, die die Dauer eines Pulses und das Zeitintervall (Tn) aufweist, das zwei aufeinanderfolgende Pulse trennt; und
Überprüfen und zwar an der Schalttafel (5), der Kohärenz der Sequenz (S) hinsichtlich der Charakteristika, die während der vorhergehenden Kommunikation gespeichert wurden, und zwar für das Unterbrechen der Kommunikation im Falle einer Anomalie.

2. Authentisierungsverfahren gemäß Anspruch 1, **dadurch gekennzeichnet, dass** der aktuelle Wert (Tn) der temporären Variablen abhängt von einem vorhergehenden Wert (Tn-1) der Variablen in der Sequenz (S) und von zumindest einer Charakteristik des Zufallswerts von zumindest einer vorhergehenden Kommunikation.

3. Authentisierungsverfahren nach Anspruch 1 oder 2, **dadurch gekennzeichnet, dass** die Pulse (In) eine supravokale Frequenz modulieren.

4. Authentisierungsverfahren nach einem der Ansprüche 1 bis 3, **dadurch gekennzeichnet, dass** die Charakteristik des Zufallswerts von der Anzahl der Pulse (In) abhängt, die in der Sequenz (S) der vorhergehenden Kommunikation enthalten sind.

5. Authentisierungsverfahren nach einem der Ansprüche 1 bis 4, **dadurch. gekennzeichnet, dass** die Charakteristik des Zufallswerts von der Dauer von zumindest einer vorhergehenden Kommunikation abhängt.

6. Authentisierungsverfahren nach einem der Ansprüche 1 bis 5, **dadurch gekennzeichnet, dass** die Charakteristik des Zufatlswerts in Beziehung steht zur Zahl bzw. Nummer, die für zumindest eine vorhergehende Kommunikation gewählt wurde.

7. Authentisierungsverfahren gemäß einem der Ansprüche 1 bis 6, **dadurch gekennzeichnet, dass** die Dauer (t) eines Pulses (In) größer als die Dauer einer offenen Schleife-Unterbrechungsdauer eines Dezimälwählvorgangs ausgewählt wird, und zwar erhöht um das Zweifache der minimalen Dauer (X), die notwendig ist für die Detektion eines Pulses (In) bei der Schalttafel (5).

8. Authentisierungsverfahren gemäß einem der Ansprüche 1 bis 7, **dadurch gekennzeichnet, dass** es den Schritt des Bewirkens einer Unterbrechung der Kommunikation am Ende einer zufälligen Zeit aufweist, und zwar am Terminal (4) während einer Reset-Sequenz.

9. Authentisierungsverfahren gemäß einem der Ansprüche 1 bis 8, **dadurch gekennzeichnet, dass** der Bereich einer möglichen Variation der temporären Variablen (Tn) unterteilt ist in Klassen von vorbestimmten Dauem.

10. Authentisierungsverfahren nach Anspruch 9, **dadurch gekennzeichnet, dass** es den Schritt der Nutzung einer Rücksetzsequenz aufweist nach jeder Leitungsunterbrechung, die von der Schalttafel bzw. Schaltzentrale (5) ausgelöst wird, wobei ein erster Zeitintervall (Tinit) der Rücksetzsequenz einer vorbestimmten zusätzlichen Klasse entspricht und ein zweiter Zeitintervall (T0), der zufällig durch das Terminal (4) ausgewählt wird, und zwar unterschiedlich zu den Werten, die während vorangegangener Rücksetzsequenzen genutzt wurden.

11. Authentisierungsverfahren gemäß Anspruch 9 oder 10, **dadurch gekennzeichnet, dass** es den Schritt der Nutzung zusätzlicher Klassen für das Übertragen von Information an den Terminal (4) durch die Telefonleitung (3) aufweist.

12. Antibetrugssystem für eine Telefonleitung (3), die einem Terminal (4) zugeordnet ist und mit einer Schaltzentrale bzw. einer Schalttafel (5) verbunden ist, **dadurch gekennzeichnet, dass** es Folgendes aufweist:
eine Vorrichtung (1) am Terminal (4) für das Übertragen einer Pseudo-Zufallssequenz (S) von Pulsen (In) während einer Kommunikation, wobei die Sequenz (S) zumindest eine temporäre Variable (Tn) trägt, die ausgewählt ist aus der Gruppe, die die Dauer von einem Puls und das Zeitintervall aufweist, das zwei aufeinanderfolgende Pulse trennt, und
basierend auf zumindest einer Charakteristik des Zufallswerts, die in Beziehung zumindest zu einer vorhergehenden Kommunikation steht und in der Übertragungsvorrichtung (1) gespeichert ist; und
eine Vorrichtung (2) bei der Schalttafel bzw. Schaltzentrale (5) für das Detektieren der Pseude-Zufallssequenz (S), die Mittel (K) aufweist für das Öffnen der Leitung (3), wenn die detektierte Sequenz nicht kohärent ist mit der Charakteristik des Zufallswerts, der mit der vorhergehenden Kommunikation in Beziehung steht und in der Empfangsvorrichtung (2) gespeichert ist.

13. System nach Anspruch 12, **dadurch gekennzeichnet, dass** die Übertragungsvorrichtung (1) in das Terminal (4) integriert ist.

14. System nach Anspruch 12 oder 13, **dadurch gekennzeichnet, dass** die Übertragungs- (1) und die Empfangs- (2) Vorrichtungen eine Schaltung (11) für das Detektieren des Stroms in der Leitung (3) aufweisen.

## Claims

1. An authentication method of a terminal (4) connected to a first end of a telephone line (3) whose second end is connected to a switchboard (5), **characterized in that** it comprises the steps of:
transmitting from the terminal (4), during a communication, a pseudo-random sequence (S) of pulses (In) calibrated in amplitude and carrying at least one temporal variable (Tn) computed from at least one stored characteristic of random value and related to at least one previous communication, said temporal variable being chosen in the group comprising the duration of one pulse and the time interval (Tn) separating two successive pulses; and
checking, at the switchboard (5), the coherence of said sequence (S) with respect to said characteristics stored during the previous communication for interrupting the communication in case of anomaly.

2. The authentication method according to claim 1,
**characterized in that** the current value (Tn) of the temporal variable depends on the previous value (Tn-1) of the variable in the sequence (S) and on at least one characteristic of random value of at least one previous communication.

3. The authentication method according to claim 1 or 2, **characterized in that** the pulses (In) modulate a supravocal frequency.

4. The authentication method according to any of claims 1 to 3, **characterized in that** said characteristic of random value corresponds to the number of pulses (In) contained in the sequence (S) of the previous communication.

5. The authentication method according to any of claims 1 to 4, **characterized in that** said characteristic of random value corresponds to the duration of at least one previous communication.

6. The authentication method according to any of claims 1 to 5, **characterized in that** said characteristic of random value is related to the number dialed for at least one previous communication.

7. The authentication method according to any of claims 1 to 6, **characterized in that** said duration (t) of a pulse (In) is chosen to be greater than the duration of an open loop interruption period of a decimal dialing, increased by twice the minimum duration (X) necessary for the detection of a pulse (In) at the switchboard (5).

8. The authentication method according to any of claims 1 to 7, **characterized in that** it comprises the step of causing, at the terminal (4) during a reset sequence, an interruption of the communication at the end of a random time.

9. The authentication method according to any of claims 1 to 8, **characterized in that** the range of possible variation of the temporal variable (Tn) is divided in classes of predetermined durations.

10. The authentication method according to claim 9, **characterized in that** it comprises the step of using a reset sequence after each line interruption triggered from the switchboard (5), a first time interval (Tinit) of said reset sequence corresponding to a predetermined additional class and a second time interval (T0) being chosen at random, by the terminal (4), distinct from the values used during previous reset sequences.

11. The authentication method according to claim 9 or 10, **characterized in that** it comprises the step of using additional classes for transmitting information to the terminal (4) through the telephone line (3).

12. An anti-fraud system for a telephone line (3) allocated to a terminal (4) and connected to a switchboard (5), **characterized in that** it comprises:
at the terminal (4), a device (1) for transmitting a pseudo-random sequence (S) of pulses (In) during a communication, said sequence (S) carrying at least one temporal variable (Tn) chosen in the group comprising the duration of one pulse and the time interval separating two successive pulses, and based on at least one characteristic of random value related to at least one previous communication and stored in the transmission device (1); and
at the switchboard (5), a device (2) for detecting said pseudo-random sequence (S), including means (K) for opening the line (3) if the detected sequence is not coherent with said characteristic of random value related to the previous communication and stored in the reception device (2).

13. The system according to claim 12, **characterized in that** the transmission device (1) is integrated in the terminal (4).

14. The system according to claim 12 or 13, **characterized in that** the transmission (1) and reception (2) devices comprise a circuit (11) for detecting the current in the line (3).
